# EUROPEAN PATENT SPECIFICATION

(11) **EP 4 221 661 B1**
(45) Date of publication and mention of the grant of the patent: **25.09.2024**
(21) Application number: 21786387.7
(22) Date of filing: 29.09.2021
(51) Int. Cl.: A61G 15/14, A61C 19/00, A47K 1/00, F16M 11/04

(54) **DENTAL INSTRUMENT ACCESSORY**
ZUBEHÖR FÜR ZAHNÄRZTLICHE INSTRUMENTE
ACCESSOIRE D'INSTRUMENT DENTAIRE

(30) Priority: 30.09.2020 EP 20199416
(43) Date of publication of application: 09.08.2023
(73) Proprietor: XO Care A/S, 2970 Horsholm (DK)
(72) Inventor: SØRENSEN, Leif Kim, 2930 Klampenborg (DK); ANDREASEN, Michael Guldsteen, 3460 Birkerød (DK)
(74) Representative: AWA Denmark A/S
(86) International application number: PCT/EP2021/076819
(87) International publication number: WO 2022/069556

(56) References cited:
- FR-A5- 2 151 771
- FR-A5- 2 151 771
- US-A- 3 704 675
- US-A- 5 645 144
- US-A- 5 897 087
- US-A- 5 897 087
- US-A1- 2002 170 115
- US-A1- 2002 170 115
- US-A1- 2003 061 660
- US-A1- 2003 061 660
- US-A1- 2009 247 819
- US-A1- 2018 066 689
- US-A1- 2018 066 689
- US-B1- 7 175 143
- US-B2- 8 425 404

## Description

### Technical Field

The present invention relates to a holding arrangement for holding a dental tray, a dental tray system comprising a holding arrangement and a dental tray, and a dental chair comprising the holding arrangement.

### Background

Dental trays are commonly used by dentists when performing dental examinations and/or procedures. The dental trays are often used for storing hand tools, such as a mouth mirror, a dental sickle, scalers, tweezers, or the like, so that these are ready at hand when the dentist needs them, but may also be used as storage space for other dental appliances. Such trays are typically held by a tray holding arrangement at a fixed position relative to a dental chair, cabinet, or the like.

Since hand tools are often used in the mouth of a patient and subsequently placed on the tray, sometimes to be reused on the same patient a little later in the examination and/or procedure, the trays should be clean to avoid any contamination of the patient, including cross-contamination from a previous patient. Sufficiently cleaning such trays, however, requires effort and time from skilled personnel, such as dental assistants, which again may reduce the number of patients the dentist can take in in one day.

Often, multiple trays are provided with each holding arrangement, such that a tray with tools, after use with one patient, is removed from the tray holding arrangement and stowed away for later cleaning and a new or clean tray with tools is typically provided for the next patient or when considered necessary. When using and notably when removing the tray, there is, however, a risk that dirt and/or bacteria or the like from a patient are exchanged between the holding arrangement and the tray. Consequently, the holding arrangement will often also need cleaning, which, again, requires time and effort from skilled personnel.

In some prior art dental trays, a disposable tray cover is provided to cover a main surface of the tray such that the instruments are in contact with the disposable cover instead of the tray. This, however, increases the complexity as well as time to prepare for a new patient, as the cover will need to be arranged carefully to cover the entire main surface, so as to prevent the tray from being infected. Moreover, a holding arrangement, holding the tray, may still need cleaning, as there is a risk that the holding arrangement be-coms infected, as dirt and/or bacteria may be transferred between the tray cover and the holding arrangement, notably when removing the cover.

Relevant prior art is exemplified by US 2002/170115 A1, US 2018/066689 A1, FR 2 151 771 A5, and US 5 897 087 A. US 2003/061660 A1 discloses a holding arrangement, and a dental tray system, but does not disclose any holding arrangement having a spring element being configured to bias an engagement member towards an engaged position, in which the engagement member is configured to engage with a dental tray so as to hold the dental tray.

It is therefore desirable to provide a dental tray holding arrangement, which allows for an easy insertion and removal of a dental tray, whilst providing holding capabilities for the tray to remain stable in use. It is furthermore desirable to provide a dental tray holding arrangement, which is easy to clean.

On this background it is therefore desirable to provide an improved dental tray holding arrangement, which at least mitigates some of the above-mentioned drawbacks.

### Summary

A first aspect of the present disclosure relates to a holding arrangement for holding a dental tray, the holding arrangement comprising
a base member,
an engagement member, which is arranged to be slidably displaceable on a surface of the base member along a first axis, and
a spring member configured to bias the engagement member towards an engaged position, in which the engagement member is configured to engage with a dental tray so as to hold the dental tray.

It has been realised that by providing a slidably displaceable engagement member configured to engage with the dental tray, the engagement member may be displaced so as to allow the tray to be arranged in the holding arrangement so that the engagement member is biased back into engaged position to engage with the tray. This, again, allows for an easy insertion of the tray, as the tray may be inserted by merely guiding the tray into the holding arrangement. This, furthermore, allows for a reduced risk of infecting the holder, since a user, e.g. a dentist or dental assistant, may not need to touch any part of the holding arrangement, since the tray or a part of it may cause the slidable displacement of the engagement member during the insertion of the tray.

Another advantage may be that the tray may be easily removed from the holding arrangement by rotating the tray around a point, at which the tray is engaged with the engagement member. This, may moreover allow for a removal of the tray without a user having to touch the holding arrangement, again further reducing the risk of the infecting the holding arrangement.

The tray may, furthermore, be easily removed by manually forcing and/or pulling the engagement member towards an unengaged position, in which it is not engaged with the tray. Thereby an alternative easy and/or controlled removal of the tray, potentially without having to tilt the tray, is provided, whilst any instruments or the like arranged on the tray remain there.

Furthermore, an easier cleaning of the holding arrangement may be provided, as only the engagement member may need to be cleaned, since the engagement member, which may be in contact with the tray, may be prevent bacteria and dirt from the tray from coming in contact with other parts of the holding arrangement.

The first axis may, in use, be or may be substantially parallel or parallel to the vertical direction.

The holding arrangement may be configured to hold a dental tray.

The engagement member may be slidably disposable between the engaged position and the unengaged position.

The engaged position may be a first extreme position of the engagement member. Where the first axis, in use, is and/or extends in the vertical direction or is and/or extends substantially parallel or parallel to the vertical direction, the engaged position may be a lowermost position in the vertical direction.

An unengaged position may be a second extreme position of the engagement member.

Where the first axis, in use, is and/or extends in the vertical direction or is and/or extends substantially parallel or parallel to the vertical direction, the unengaged position may be an uppermost position in the vertical direction.

When the engagement member is disposed in an unengaged position, the spring member may be more compressed and/or may exercise a larger spring force on the engagement member, potentially biasing the engagement member towards the engaged position. In another embodiment, the spring member may, when the engagement member is in the unengaged position, be extended further, potentially providing a spring force towards a relaxed position of the spring.

In some embodiments, the engagement member may, in the unengaged position, allow the tray to be removed. Alternatively or additionally, the tray may be removed by extracting the tray in a direction opposite or substantially opposite to a direction, in which the tray is inserted in the holding arrangement.

The engagement member may comprise a guiding surface. The guiding surface may alternatively or additionally be a contact surface configured to come into contact with at least a portion of the tray. The guiding surface may be configured to allow a tray to slide the engagement member towards an unengaged position.

The guiding surface may comprise a bevelled portion. In some embodiments the guiding surface is configured so that the tray slides the engagement member further towards the unengaged position as the tray is pushed towards a receiving surface portion of the base member, where a such portion is provided. Alternatively or additionally, the guiding surface may be configured to allow the tray to push and/or slide the engagement member towards the unengaged position, until the tray is removed from the holding arrangement or disposed adjacent to the receiving surface portion of the base member.

In some embodiments, the dental tray is a tray for holding dental instruments and/or is a dental instrument tray, potentially configured to receive and/or store thereon dental tools, such as dental hand tools. The dental tray may, alternatively or additionally, comprise a main surface, configured to receive and/or store thereon dental tools. The main surface may, at least in the engaged position of the engagement member with the tray, extend in a substantially horizontal or horizontal direction.

In some embodiments, the base member is an elongate member, potentially elongate along the first axis, i.e. in a direction parallel to the first axis. Alternatively or additionally, at least a portion of the base member may have a substantially cylindrical or cylindrical outer circumference, such as a substantially circular cylindrical and/or circular cylindrical outer circumference, and may potentially have height, which extends in a direction parallel to the first axis. The base member may be made from a rigid material, such as a metal and/or a metal composition and/or a polymer.

The first axis may be a centre axis, such as a geometrical centre axis or a gravitational centre axis, of the base member and/or at least a portion of the base member. Where at least a portion of the base member has a substantially circular cylindrical outer circumference, the first axis may be a centre axis of the substantially circular cylindrical portion.

The base member may comprise an opening, such as a bore, a groove, or the like, configured to accommodate an attachment element for fastening the holding arrangement to another element. The opening may have a substantially circular cross-section and/or may be through-going through the base member. The opening may, additionally or alternatively, be arranged at a central position, such as at a geometrical centre of at least a portion of the base member. The opening may extend parallel to the first axis. In some embodiments, the first axis is a centre axis of the opening.

In some embodiments, the base member comprises a receiving surface portion potentially configured to be positioned adjacent to and/or in contact with at least part of the tray in the engaged position. The receiving surface portion may be a first plain surface portion. The receiving surface portion may be configured to act as an abutting surface of at least a portion of the tray, such as part of a raised edge portion. The receiving surface portion may extend at least in a direction parallel to the first axis and/or may, in the engaged position, be configured to be adjacent to an outer surface of an edge portion of the tray. In some embodiments, the receiving surface portion may comprise and/or be a bevelled portion, potentially of a substantially cylindrical outer circumference.

Alternatively or additionally, the base member may comprise a second plain surface, along which at least a portion of the engagement member may slide. A portion of the engagement member may be positioned adjacent to and/or may be in contact with the second plain surface.

Alternatively or additionally, the base member may comprise a limitation surface configured to aid in limiting the slidable movement of the engagement member in at least one direction along the first axis. Alternatively or additionally, a limitation surface may at least partially define an extreme position of the engagement member.

The base member may comprise an upper surface. The upper surface may be upper when, at least in use, seen in a direction of the first axis and/or in the vertical direction. Alternatively or additionally, the upper surface may be an upwards facing surface, when, at least in use, seen in a direction of the first axis and/or in the vertical direction.

The base member may comprise a bottom surface. The bottom surface may be opposite the upper surface and/or may be a lowermost surface of the base member when, at least in use, seen in a direction of the first axis and/or in the vertical direction. Alternatively or additionally, the bottom surface may be a, at least in use seen in a direction of the first axis and/or in the vertical direction, downwards facing surface.

The spring member may, in some embodiments, comprise a substantially helical or helical spring, potentially a spring having a helical or substantially helical coil. Alternatively or additionally, the spring member may comprise a cantilever spring, a balance spring, and/or a spring of another type.

The spring member may be arranged in a cavity of the base member.

In some embodiments, the base member comprises one or more cavities, in which the spring member and/or a portion of the engagement member may be arranged. The one or more cavities may be configured to allow the engagement member to be displaceable along the first axis. Additionally or alternatively, the cavity and/or surfaces delimiting the cavities may be configured to define at least one extreme position, potentially both extreme positions, of the engagement member along the first axis. The cavity may be provided as a bore or recess or a combination thereof in the base member.

Where a flange member (described in the following) is present, the one or more cavities may be delimited by the base member and by the flange member. In some embodiments, the one or more cavities are arranged adjacent to, potentially extending from, a periphery of the base member. In some embodiments, the base member comprises two cavities, potentially arranged symmetrically around a centre plane of the base member.

The engagement member may comprise a portion, which, at least in the engaged position, may be abutting and/or in contact with the spring member. In some embodiments, the spring member applies a spring force on the portion of the engagement member. Where the spring member is arranged in a cavity of the base member, at least part of the portion of the engagement member may be arranged in the cavity.

The engagement member may be made from a rigid material, such as a polymer. In some embodiments, the engagement member has an outer surface configured to at least partially surround an outer periphery of the base member. Where at least part of the base member has a circular cylindrical or substantially circular cylindrical outer circumference, the engagement member may be configured to surround the circular cylindrical or substantially circular cylindrical outer surface.

In some embodiments, the engagement member comprises a recess, which, in the engaged position, is configured to engage with at least part of an edge portion of the dental tray.

Thereby, the tray may furthermore be easily removed from the holding arrangement by rotating the tray in a direction so as to disengage the edge portion from the recess. In some embodiments, potentially where the first axis extends in the vertical direction, the tray may be configured to be disengaged with the engagement member when the tray is rotated upwards in the vertical direction.

Furthermore, the tray may be easily removed by manually sliding the engagement member to an unengaged position and removing the tray.

The recess may, in the unengaged position, be configured not to engage with the edge portion of the tray.

The recess may be alternatively be a groove and/or be denoted as a "groove". The recess may be formed and/or elongate in a direction substantially parallel to the first axis. In some embodiments, the recess may be a substantially vertical or a vertical groove.

Additionally or alternatively, the engagement member may comprise a cover, which at least partially surrounds the base member.

Thereby, the amount of dirt and/or bacteria which can enter any potential opening of the base member may be minimised, in turn allowing for easier cleaning of the holding arrangement. Moreover, the cover may be provided in a shape, material or the like, which is easier to clean, again allowing for an easier cleaning of the holding arrangement.

The cover may fully surround the base member. Potentially, the cover surrounds an outer periphery except an upper portion, when seen in a direction parallel to the first axis, so as to allow for the displacement of the engagement member along the first axis. In some embodiments, the cover surrounds the base member at least along a portion of the base member in a direction parallel to the first axis. Where the base member comprises a receiving portion, an upper surface and a lower surface, the cover may fully surround the base member except from the plain portion, the upper surface, and the lower surface.

Where the base member has at least a portion having a substantially cylindrical or cylindrical outer circumference, the cover may cover the substantially cylindrical or cylindrical outer circumference.

The cover may be formed integrally and/or in one piece with the engagement member.

In this specification, the terms "integrally" or "integrally provided" or "integrally formed" or similar may be defined as the associated features form an integral part of a whole; and/or be moulded in one piece; and/or be substantially inseparable by hand.

In some embodiments, the holding arrangement further comprises a flange member for supporting a dental tray.

This, in turn allows for an improved stability of the held tray, at least in the engaged position of the engagement member.

The flange member may be configured to support the dental tray, at least in the engaged position of the engagement member.

The flange member may extend in a plane substantially orthogonal to the first axis. The flange member may be configured to support at least a portion of the dental tray, such as a main surface.

In some embodiments, the flange member is furthermore configured to limit a movement of the engagement member along the first axis.

Alternatively or additionally, the flange member may furthermore be configured to support the engagement member, at least in the engaged position. The flange member may comprise a supporting portion for supporting the engagement member. The engagement member may be in a position to engage with the tray when the engagement member is arranged adjacent to and/or rests on the supporting portion.

The flange member and the base member may be formed integrally and/or in one piece. In some embodiments, the flange member is fixed to the base member by means of one or more fastening means. The flange member may be fixed to and/or extend from a bottom surface, when seen along the first axis, of the base member. An opening for the fastening means may be provided in the flange member and/or in the base member.

In some embodiments, a direction of a spring force of the spring member is substantially parallel to the first axis. A direction of the spring force of the spring member may be parallel to the first axis.

Thereby, a steady bias og the engagement member towards the engaged position may be provided.

The spring member may, in some embodiments, extend in a direction parallel to the first axis. Additionally or alternatively, a centre axis of a helical coil of the spring member may be parallel to the first axis, e.g. where a plurality of spring members with helical coil springs are provided.

The holding arrangement may comprise a plurality of spring members.

This, in turn, may allow for a decentral arrangement of the spring members, allowing for an increase mounting flexibility, as a potential attachment element may be arranged centrally.

Each spring member of the plurality of spring members may be configured to bias the engagement member towards the engaged position. A spring force of each of the spring members may be substantially parallel to the first axis.

Each of the spring members may comprise similar types of springs and/or may comprise different types of springs. In some embodiments, the plurality of spring members are helical springs, potentially having a same or substantially same spring constant.

In some embodiments, the base member comprises an attachment element for attachment of the holding arrangement to another apparatus, such as a part of a dental chair or a dental cabinet.

Thereby, the holding arrangement may be easily and securely fixed to the other apparatus.

The attachment element may be configured to attach the holding arrangement to the other apparatus.

The attachment element may be arranged in an opening of the base member. In some embodiments, a portion of the attachment element projects from an upper surface of the base member.

The attachment element may be configured to, at least in an attached state of the holding arrangement with the other apparatus, an upper surface of the base member to lie against and/or be positioned adjacent to a surface of the other apparatus.

The attachment element may comprise a threaded rod.

The threaded rod may be configured to engage with a thread of the other apparatus.

The threaded rod may be provided integrally and/or in one piece with the base member. Alternatively or additionally, the attachment element may furthermore comprise a screw head, such as a Philips, a Pozidriv, a hex (e.g. Unbrako/Allen), and/or a Torx screw head.

Alternatively or additionally, the attachment element is a fastening element having a threaded rod portion, such as a screw or a bolt, which is arranged in an opening of the base member. The fastening element may be configured to be moveable inside the opening.

Where a flange member is provided, the base member and the flange member may be configured to retain the attachment element in the opening and/or to prevent the attachment element from being completely removed from the opening. An opening may be provided in the flange member to provide access to a potential screw head of the attachment element.

A second aspect of the present disclosure relates to a dental tray system comprising:
a dental tray,
a holding arrangement for holding the dental tray, the holding arrangement comprising
   a base member,
   an engagement member, which is arranged to be slidably displaceable on a surface of the base member along a first axis, and
   a spring member configured to bias the engagement member towards an engaged position, in which the engagement member is configured to engage with a dental tray so as to hold the dental tray.

Alternatively, a second aspect of the present disclosure relates to a dental tray system comprising a dental tray and a holding arrangement according to the first aspect of the present disclosure.

The dental tray system may provide identical or similar advantages to the holding arrangement according to the first aspect of the present disclosure. Embodiments of the dental tray system and/or features thereof may be the same as and/or may be similar to the embodiments and/or features described with respect to the holding arrangement according to the first aspect of the present disclosure.

The dental tray may be a tray for holding dental instruments and/or is a dental instrument tray, potentially configured to receive and/or store thereon dental tools, such as dental hand tools.

In some embodiments, the dental tray comprises a main surface and a raised edge portion extending from at least a portion of an edge of the main surface and
wherein the engagement member comprises a recess, which, in the engaged position, is configured to engage with at least part of the edge portion of the dental tray.

Thereby, an easy engagement may be provided, since the tray may be inserted from any angle and engaged with by the recess, aided by the spring member. Furthermore, an easy removal of the tray may be provided, since the tray may be rotated to be disengaged with the recess. Moreover, an alternative easy removal of the tray may be facilitated by sliding the engagement member towards the unengaged position, in which the recess is potentially disengaged with the dental tray edge portion, and removing the dental tray.

The recess may be a "groove", potentially a, in use, vertically extending groove as described with respect to the holding arrangement according to the first aspect.

The edge portion may surround the main surface. Additionally or alternatively, the edge portion may be formed integrally and/or in one piece with the main surface. The edge portion may extend in a direction substantially perpendicular to a plane, in which the main surface lies.

The main surface may, at least in the engaged position of the engagement member with the tray, extend in a substantially horizontal or in a horizontal direction.

A third aspect of the present disclosure relates to a dental chair comprising a holding arrangement according to the first aspect of the present disclosure.

The dental chair according to the third aspect may provide identical or similar advantages to the holding arrangement according to the first aspect of the invention. Embodiments of the dental chair and/or features thereof may be the same as described with respect to the holding arrangement according to the first aspect of the invention.

The different aspects of the present invention can be implemented in different ways including as a holding arrangement for holding a dental tray, a system comprising a dental tray and a holding arrangement, and a dental chair comprising a holding arrangement as described above and in the following, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and non-limiting detailed description of embodiments of the present invention, with reference to the appended drawings, wherein:
FIG. 1 shows a perspective view of a system comprising a holding arrangement holding a tray according to an embodiment of the present disclosure,
FIG. 2 shows a perspective view of a holding arrangement according to an embodiment of the present disclosure,
FIG. 3a shows a cross-sectional view of a holding arrangement according to an embodiment of the present disclosure,
FIG. 3b shows a cross-sectional view of the holding arrangement shown in FIG. 3a holding a tray,
FIG. 4a shows a cross-sectional view of a base member of a holding arrangement according to the present invention,
FIG. 4b shows a cross-sectional view of the base member shown in FIG. 4a with an engagement member.

### Detailed description

In the following description, reference is made to the accompanying figures, which show by way of illustration how the invention may be practiced. Similar reference numerals are used for similar elements across the various embodiments and figures described herein.

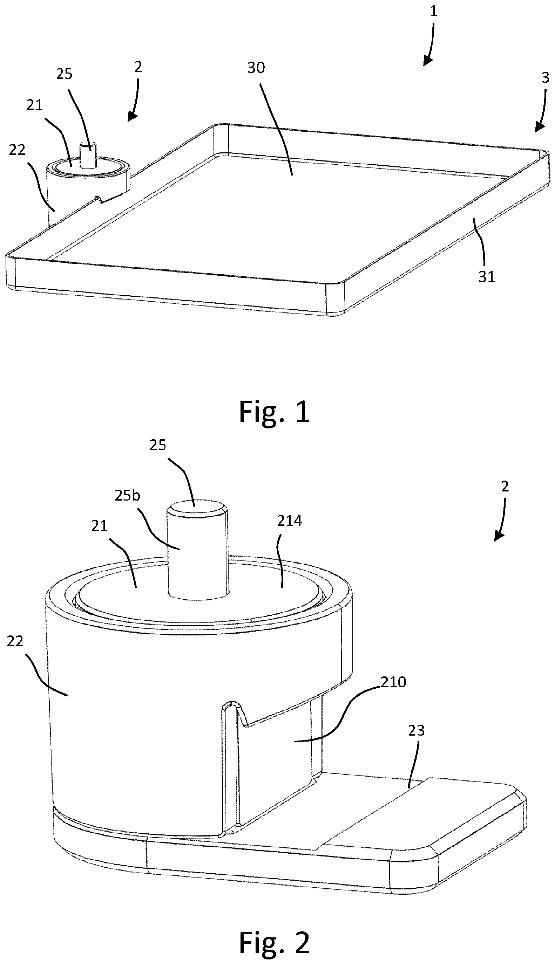

FIG. 1 shows a perspective view of a system 1 comprising a holding arrangement 2 holding a tray 3 according to an embodiment of the present disclosure. FIG. 2 shows a perspective view of a holding arrangement 2 comprising a base member 21 and an engagement member 22.

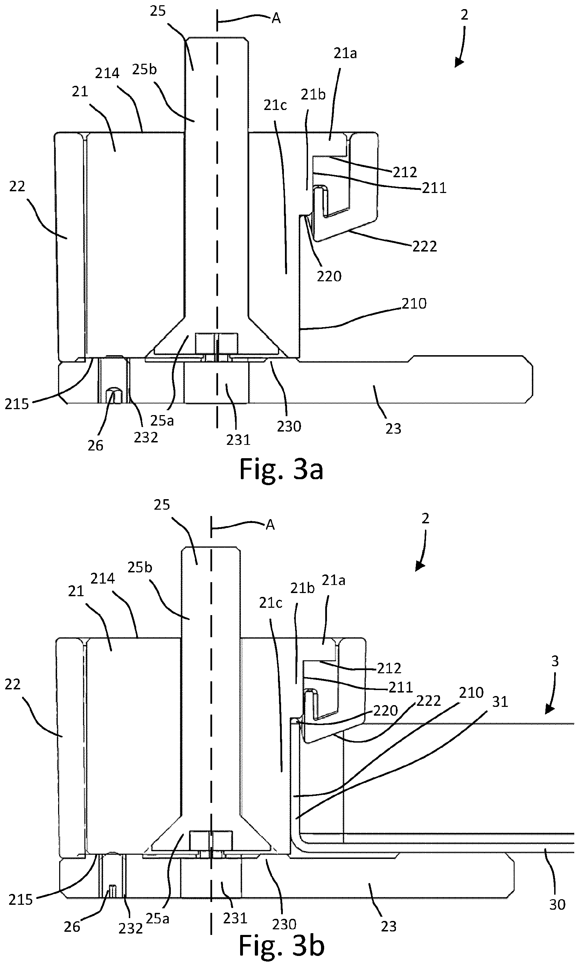

FIG. 3a shows a cross-sectional view of a holding arrangement 2. FIG. 3b shows a cross-sectional view of the holding arrangement 2 shown in FIG. 3a holding a tray 3. the cross-sections of FIGs. 3a and 3b are cross-sections in the same plane of the holding arrangement 2.

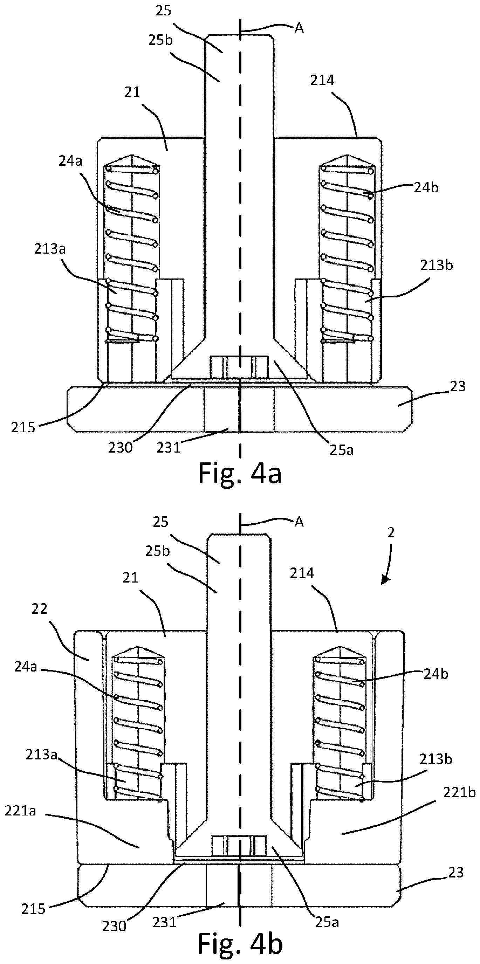

FIG. 4a shows a cross-sectional view of a base member 21 of a holding arrangement 2. FIG. 4b shows a cross-sectional view of the base member 21 shown in FIG. 4a with an engagement member 22. FIGs. 4a and 4b are cross-sectional views in a same plane, orthogonal to the plane of the cross-sectional views shown in FIGs. 3a and 3b.

The holding arrangement 2 comprises a base member 21, an engagement member 22, which is arranged to be slidably displaceable on a surface of the base member 21 along a first axis A, and two spring members 24a, 24b configured to bias the engagement member 22 towards an engaged position, in which the engagement member 22 is configured to engage with a dental tray 3 so as to hold the dental tray 3. The spring members 24a, 24b each comprise a helical spring.

The first axis A extends in the embodiments shown in FIGs. 1-4b in the, in use, vertical direction.

In FIGs. 1 and 3b, the engagement member 22 is shown in the engaged position, in which the engagement member 22 is engaged with the tray 3. The engaged position is a first extreme position of the engagement member 22. Since the first axis A, in use, extends in the vertical direction, the engaged position is a lowermost position in the vertical direction.

The engagement member 22 is slidably disposable between the engaged position and the unengaged position.

The unengaged position is a second extreme position of the engagement member 22.

Since the first axis A, in use, extends in the vertical direction, the unengaged position is an uppermost position in the vertical direction.

When, in the embodiments shown in FIGs. 1-4b, the engagement member 22 is disposed in an unengaged position, the spring members 24a, 24b is more compressed and may exercise a larger spring force on the engagement member 22, potentially biasing the engagement member 22 towards the engaged position.

The dental tray 3 is a tray for holding dental instruments (not shown). The dental tray 3 comprises a main surface 30, configured to store thereon dental tools. The main surface 30 extends in the engaged position of the engagement member 22 with the tray 3, in a horizontal direction. The dental tray 3 further comprises a raised edge portion 31 extending from the edge of the main surface 30. The edge portion 31 is formed integrally and in one piece with the main surface 30 and extends in a direction substantially perpendicular to a plane, in which the main surface 30 lies.

The engagement member 22 comprises a recess 220, which, in the engaged position, is configured to engage with at least part of the edge portion 31 of the dental tray 3, as e.g. shown in FIG. 3b.

The engagement member 22 comprises a guiding surface 222. The guiding surface 222 is a contact surface and is configured to come into contact with at least a portion of the tray 3. The guiding surface 222 is configured to allow the tray 3 to slide the engagement member 22 towards the unengaged position. In Figs. 3a and 3b, the raised edge portion 31 of the tray causes the guiding surface 222 to be slided along axis A into the unengaged position.

The guiding surface 222 comprises a bevelled portion. The guiding surface 222 is configured so that the tray 3 slides the engagement member 22 further towards the unengaged position as the tray 3 is slided towards a receiving surface portion 210 of the base member 21. The guiding surface 222 is configured to allow the tray to slide the engagement member 22 towards the unengaged position, until the tray 3 is removed from the holding arrangement 1 or disposed adjacent to the receiving surface portion 210 of the base member 21 as shown in Fig. 3b.

The engagement member 22 allows, in the unengaged position, the tray 3 to be removed. The tray 3 can be removed by extracting the tray 3 in a direction opposite or substantially opposite to a direction, in which the tray 3 is inserted in the holding arrangement 1.

The base member 21 is an elongate member with a portion 21a having a circular cylindrical outer circumference and having a height which extends along the first axis A. The base member 21 is made from a metal composition.

The first axis A is a geometrical centre axis of the base member portion 21a.

The base member 21 further comprises a receiving surface portion 210 configured to support a portion of the tray 3. The receiving surface portion 210 is a first plain surface portion of the base member 21. The first plain surface portion 210 extends in a direction parallel to the first axis A and is, in the engaged position, adjacent to an outer surface of the edge portion 31 of the tray 3. The first plain surface 210 is provided on a bevelled portion 21c of a substantially cylindrical outer circumference of the base member 21.

The base member 21 further comprises a second plain surface 211, provided on a second bevelled portion 21b and along which a portion of the engagement member 22 can slide. A portion of the engagement member 22 is positioned adjacent to the second plain surface 211.

The base member 21 moreover comprises a limitation surface 212, provided on the base member portion 21a and configured to aid in limiting the slidable movement of the engagement member 22 along the first axis A. The limitation surface 212 furthermore defines an extreme position of the engagement member 22 in a direction parallel to the first axis A. The extreme position is an, in use, upper extreme position in the direction parallel to the first axis and in the vertical direction, e.g. in the upwards direction on FIGs. 3a and 3b.

The base member 21 comprises an upper surface 214. The upper surface 214 is upper when, at least in use, seen in a direction of the first axis A as well as in the vertical direction.

The base member 21 comprises a bottom surface 215. The bottom surface is opposite the upper surface 214. The bottom surface 215 is lower when, at least in use, seen in a direction of the first axis A as well as in the vertical direction.

The spring members 24a, 24b are arranged in a respective cavity 213a, 213b of the base member 21. The engagement member 22 comprises two portions 221a, 221b, which in the engaged position are abutting and in contact with the spring members 24a, 24b. The spring members 24a, 24b apply a spring force on a respective portion 221a, 221b of the engagement member 22. The portions 221a, 221b of the engagement member 22 are arranged in the cavities 213a, 213b, respectively. A direction of a spring force of each of the spring members 24a, 24b is parallel to the first axis A. A centre axis of a helical coil of each of the spring members 24a, 24b are parallel to the first axis A.

The cavities 213a, 213b and the surfaces delimiting the cavities 213a, 213b aid in defining both extreme positions of the engagement member 22 along the first axis A.

The engagement member 22 has a cover surrounding an outer periphery of the base member 21. As shown in FIGs. 1-3b, the engagement member 22 surrounds the base member 21 except the first plain surface 210 and the top 214 and bottom surfaces 215. Portions 21a and 21b of the base member 21 are, thus, completely surrounded by the cover of the engagement member 22. The cover is formed integrally and in one piece with the engagement member 22.

The holding arrangement 2 further comprises a flange member 23 supporting a dental tray 3 in the engaged position.

The flange member 23 extends in a plane orthogonal to the first axis A.

The flange member 23 furthermore limits a movement of the engagement member 22 along the first axis A.

The flange member 23 comprises a supporting portion 230 for supporting the engagement member 22.

The flange member 23 is fixed to the base member 21 by means of a fastening means 26. The flange member 23 is fixed to the bottom surface 215 of the base member 21. An opening 232 for the fastening means 26 is provided in the flange member 23.

The cavities 213a, 213b are moreover delimited by the base member 21 and by the flange member 23 and are arranged symmetrically around a centre plane of the base member 21 as can be seen e.g. in FIGs. 4a-4b.

The base member 21 comprises an opening accommodating an attachment element 25 for fastening the holding arrangement 2 to another element (not shown). The opening has a circular cross-section and is through-going through the base member 21. The opening and thus the attachment element 25 are arranged at a geometrical centre of the base member portion 21a. The opening extends parallel to the first axis A, which is also a centre axis of the opening.

The attachment element 25 comprises a threaded rod 25b.

The threaded rod 25b is a threaded rod portion and is configured to engage with a thread of the other apparatus (not shown).

The attachment element 25 furthermore comprises a screw head 25a. An opening 231 is provided in the flange member 23 to provide access to the screw head 25a

The base member 21 and the flange member are configured to retain the attachment element 25 in an opening in the base member 21 and to prevent the attachment element 25 from being completely removed from the opening in the base member 21.

Although some embodiments have been described and shown in detail, the invention is not restricted to them, but may also be embodied in other ways within the scope of the subject matter defined in the following claims. In particular, it is to be understood that other embodiments may be utilised, and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A holding arrangement (2) for holding a dental tray (3), the holding arrangement (2) comprising
a base member (21),
an engagement member (22), which is arranged to be slidably displaceable on a surface of the base member (21) along a first axis (A), and
a spring member (24a, 24b) configured to bias the engagement member (21) towards an engaged position, in which the engagement member (22) is configured to engage with a dental tray (3) so as to hold the dental tray (3).

2. The holding arrangement according to claim 1, wherein the engagement member comprises a recess, which, in the engaged position, is configured to engage with at least part of an edge portion of the dental tray.

3. The holding arrangement according to claim 1 or 2, wherein the engagement member comprises a cover, which at least partially surrounds the base member.

4. The holding arrangement according to any one of the preceding claims comprising a flange member for supporting a dental tray.

5. The holding arrangement according to any one of the preceding claims, wherein a direction of a spring force of the spring member is parallel to the first axis.

6. The holding arrangement according to any one of the preceding claims comprising a plurality of spring members.

7. The holding arrangement according to any one of the preceding claims, wherein the base member comprises an attachment element for attachment of the holding arrangement to another apparatus, such as a part of a dental chair or a dental cabinet.

8. The holding arrangement according to claim 7, wherein the attachment element comprises a threaded rod.

9. A dental tray system comprising:
a dental tray (3), and
a holding arrangement (2) according to claim 1.

10. The dental tray system according to claim 9, wherein the dental tray comprises a main surface and a raised edge portion extending from at least a portion of an edge of the main surface and
wherein the engagement member comprises a recess, which, in the engaged position, is configured to engage with at least part of the edge portion of the dental tray.

11. A dental chair comprising a holding arrangement according to any one of claims 1-8.

## Patentansprüche

1. Halteanordnung (2) zum Halten einer Dentalschale (3), wobei die Halteanordnung (2)
ein Basisglied (21),
ein Eingriffsglied (22), das so angeordnet ist, dass es auf einer Fläche des Basisglieds (21) entlang einer ersten Achse (A) gleitend verschiebbar ist, und
ein Federglied (24a, 24b) umfasst, das dazu ausgestaltet ist, das Eingriffsglied (21) zu einer Eingriffsposition hin vorzuspannen, in der das Eingriffsglied (22) dazu ausgestaltet ist, mit einer Dentalschale (3) in Eingriff zu kommen, um die Dentalschale (3) zu halten.

2. Halteanordnung nach Anspruch 1, wobei das Eingriffsglied eine Aussparung umfasst, die in der Eingriffsposition dazu ausgestaltet ist, mit mindestens einem Teil eines Randabschnitts der Dentalschale in Eingriff zu kommen.

3. Halteanordnung nach Anspruch 1 oder 2, wobei das Eingriffsglied eine Abdeckung umfasst, die das Basisglied mindestens teilweise umgibt.

4. Halteanordnung nach einem der vorhergehenden Ansprüche, umfassend ein Flanschglied zum Stützen einer Dentalschale.

5. Halteanordnung nach einem der vorhergehenden Ansprüche, wobei eine Richtung einer Federkraft des Federglieds parallel zu der ersten Achse verläuft.

6. Halteanordnung nach einem der vorhergehenden Ansprüche, umfassend eine Vielzahl von Federgliedern.

7. Halteanordnung nach einem der vorhergehenden Ansprüche, wobei das Basisglied ein Anbringelement zum Anbringen der Halteanordnung an einer anderen Vorrichtung wie einem Teil eines Dentalstuhls oder eines Dentalschranks umfasst.

8. Halteanordnung nach Anspruch 7, wobei das Anbringelement eine Gewindestange umfasst.

9. Dentalschalensystem, umfassend:
eine Dentalschale (3) und
eine Halteanordnung (2) nach Anspruch 1.

10. Dentalschalensystem nach Anspruch 9, wobei die Dentalschale eine Hauptfläche und einen erhabenen Randabschnitt umfasst, der sich von mindestens einem Abschnitt eines Rands der Hauptfläche erstreckt, und
wobei das Eingriffsglied eine Aussparung umfasst, die in der Eingriffsposition dazu ausgestaltet ist, mit mindestens einem Teil des Randabschnitts der Dentalschale in Eingriff zu kommen.

11. Dentalstuhl, umfassend eine Halteanordnung nach einem der Ansprüche 1-8.

## Revendications

1. Agencement de maintien (2) destiné à maintenir un plateau dentaire (3), l'agencement de maintien (2) comprenant
un élément de base (21),
un élément d'enclenchement (22), qui est agencé pour pouvoir être déplacé par glissement sur une surface de l'élément de base (21) le long d'un premier axe (A), et
un élément à ressort (24a, 24b) configuré pour ramener l'élément d'enclenchement (21) vers une position enclenchée, dans laquelle l'élément d'enclenchement (22) est configuré pour s'enclencher avec un plateau dentaire (3) de manière à maintenir le plateau dentaire (3).

2. Agencement de maintien selon la revendication 1, dans lequel l'élément d'enclenchement comprend une encoche qui, dans la position enclenchée, est configurée pour s'enclencher avec au moins une partie d'une portion de bord du plateau dentaire.

3. Agencement de maintien selon la revendication 1 ou 2, dans lequel l'élément d'enclenchement comprend un couvercle, qui entoure au moins partiellement l'élément de base.

4. Agencement de maintien selon l'une quelconque des revendications précédentes comprenant un élément en saillie pour supporter un plateau dentaire.

5. Agencement de maintien selon l'une quelconque des revendications précédentes, dans lequel une direction d'une force de rappel de l'élément à ressort est parallèle au premier axe.

6. Agencement de maintien selon l'une quelconque des revendications précédentes comprenant une pluralité d'éléments à ressort.

7. Agencement de maintien selon l'une quelconque des revendications précédentes, dans lequel l'élément de base comprend un élément de fixation pour la fixation de l'agencement de maintien à un autre appareil, tel qu'une partie d'un fauteuil dentaire ou d'une armoire dentaire.

8. Agencement de maintien selon la revendication 7, dans lequel l'élément de fixation comprend une tige filetée.

9. Système de plateau dentaire comprenant :
un plateau dentaire (3), et
un agencement de maintien (2) selon la revendication 1.

10. Système de plateau dentaire selon la revendication 9, dans lequel le plateau dentaire comprend une surface principale et une portion de bord surélevée s'étendant depuis au moins une portion d'un bord de la surface principale et
dans lequel l'élément d'enclenchement comprend une encoche qui, dans la position enclenchée, est configurée pour s'enclencher avec au moins une partie de la portion de bord du plateau dentaire.

11. Fauteuil dentaire comprenant un agencement de maintien selon l'une quelconque des revendications 1 à 8.
